# EUROPEAN PATENT APPLICATION

(11) **EP 1 574 741 A1**
(43) Date of publication of application: **14.09.2005**
(21) Application number: 05004811.5
(22) Date of filing: 04.03.2005
(51) Int. Cl.: F16F 9/58

(54) **Hydraulic shock absorber**

(30) Priority: 12.03.2004 JP 2004070597
(71) Applicant: KAYABA INDUSTRY CO., LTD., Tokyo 105-6190 (JP)
(72) Inventor: Oota, Akihisa c/o Kayaba Ind.Co.,Ltd., Minato-ku Tokyo 105-6190 (JP)
(74) Representative: Grünecker, Kinkeldey, Stockmair & Schwanhäusser Anwaltssozietät

(57) **Abstract**

A bump cushion (18) is inserted and fixed in an outer periphery of an upper portion of a piston rod (17) connected to a vehicle body mount (5), and the bumping of the upper portion of a cylinder (8) on the bump cushion (18) at the time of the compression operation absorbs the jolts. A circular clearance (25) is all the time formed between an inner periphery of the bump cushion (18) and an outer periphery of the piston rod (17) and the clearance (25) is communicated with an outside.

## Description

### BACKGROUND OF THE INVENTION

### Field of the Invention

The present invention relates to a hydraulic shock absorber used as a suspension for a vehicle, and in particular, to an improvement in a structure of a bump cushion (bump rubber) disposed in an upper portion of a piston rod.

### The Related Art of the Invention

In general a hydraulic shock absorber used as a suspension for a vehicle is interposed between a side of a vehicle body and a side of a vehicle axle, and is provided with a tubular bump cushion in an upper portion of a piston rod coupled to a vehicle body mount. At the time of a compression operation of the shock absorber, especially in the neighborhood of the maximum compression an upper portion of the cylinder is designed to bump on the bump cushion to provide cushioning, thus preventing jolt transmission from the side of the vehicle axle to the side of the vehicle body.

A mounting structure of the bump cushion is disclosed in, for example, Japanese Unexamined Patent Publication No. 9 - 79305. This mounting structure is provided with the bump cushion including a thick base portion molded of a rubber material and a bellows type of tubular portion connected to the base portion.

The base portion of the bump cushion is coupled to a vehicle body mount, and a piston rod penetrates through a central portion of the bump cushion, and an outer periphery of the piston rod slides on an inner periphery of the base portion. Thereby the upper portion of the cylinder bumps (contacts) on the bump cushion in the neighborhood of the maximum compression of the hydraulic shock absorber, thus to absorb jolts by compressing the bellows type of the tubular portion.

### SUMMARY OF THE INVENTION

Since in the above-mentioned hydraulic shock absorber, the inner periphery of the base portion of the bump cushion always contacts the outer periphery of the piston rod, especially when the bump cushion is compressed, the inner periphery of the base portion is strongly pressed on the outer periphery of the piston rod.

As a result, plating on the outer periphery of the piston rod comes off during a long term use, flaws are produced thereon, rust occurs thereon to damage durability of the piston rod, and the rust degrades the bump cushion itself.

And as the inner periphery of the bump cushion contacts the piston rod as described above, when the upper portion of the cylinder bumps on the bump cushion to compress the bellows type of the tubular portion, air inside the bump cushion is also compressed, but this air does not escape from the inside properly to deteriorate durability of the bump cushion due to air pressures repeatedly applied during a long term use.

It is an object of the present invention to provide a hydraulic shock absorber in which a bump cushion is not contacted to a piston rod to prevent deterioration or degradation of durability caused by the sliding of the bump cushion and the piston rod, and air inside the bump cushion at the time of the bumping of a cylinder escapes more properly to improve durability of the bump cushion.

To achieve above the object the present invention provides a hydraulic shock absorber. The shock absorber comprises a cylinder, a piston rod slidably extending from the cylinder, and a tubular bump cushion attached to a top end of the piston rod to bump an upper portion of the cylinder on a lower face of the bump cushion at the time of a compression operation, wherein, a circular clearance is formed between the bump cushion and an outer periphery of the piston rod inserted in the center of the bump cushion and communicated with an outside.

### BRIEF DESCRIPTION OF THE DRAWINGS

A preferred embodiment according to the invention will be explained below referring to the drawings, wherein:
FIG. 1 is a side view of a partial cross section showing a hydraulic shock absorber in a preferred embodiment of the present invention; and
FIG. 2 is a partially enlarged longitudinal front view of the same.

### DETAILED DESCRIPTION OF THE PREFERRED EMBODIMENT

The selected embodiment of the present invention will now be explained with reference to the drawings. It will be apparent to those skilled in the art from this disclosure that the following description of the embodiment of the present invention is provided for illustration only, and not for the purpose of limiting the invention as defined by the appended claims and their equivalents.

A preferred embodiment of the present invention will be explained with reference to the drawings.

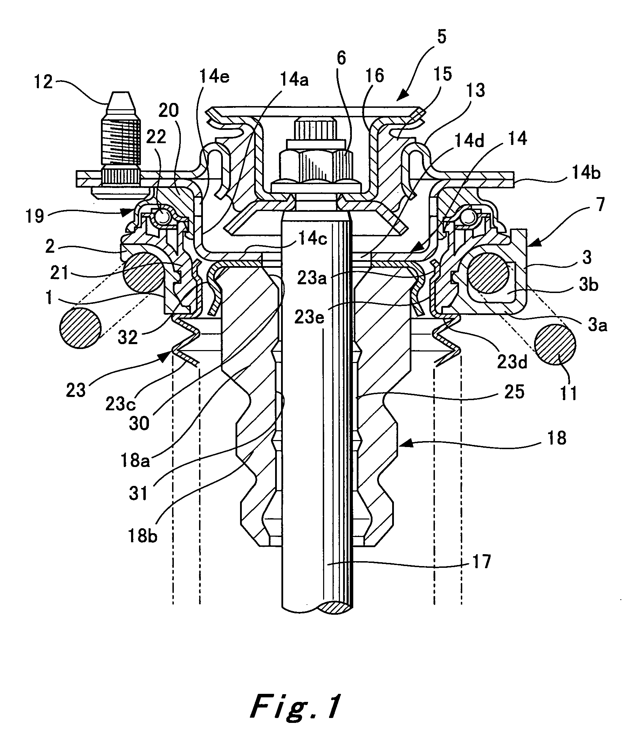

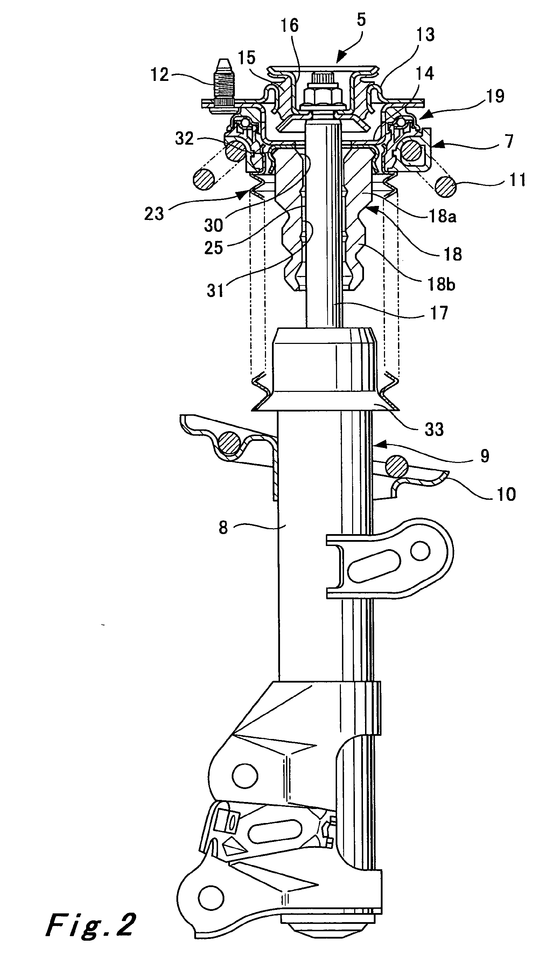

As shown in FIG. 1 and FIG. 2, an upper portion of a shock absorber 9 is coupled to a vehicle body mount 5. In detail, a piston rod 17 extends from a cylinder 8 of the shock absorber 9 so that the piston rod 17 expands from and contracts into the cylinder 9, and a top end of the piston rod 17 is coupled to the vehicle body mount 5.

The vehicle body mount 5 is provided with an inner base 13 connected to a side of a vehicle body via bolts 12, a cover 14 fastened together to a lower portion of the inner base 13 by the bolts 12, a mount rubber 15 connected to an inner periphery of the inner base 13, and a cup-shaped bracket 16 connected to an inside of the mount rubber 15.

The piston rod 17 of the shock absorber 9 penetrates through a center of the vehicle body mount 5 and the top end of the piston rod 17 is connected to the bracket 16 inside the mount rubber 15 via a nut 6.

The cover 14 is formed of a tubular body with a bottom and is provided with a tubular portion 14a, a flange portion 14b, and a bottom portion 14c. A plurality of holes 14e are formed in the circumference of the tubular portion 14a, and a through hole 14d with a diameter greater than a diameter of the piston rod 17 is formed in the center of the bottom portion 14c.

A cap 32 is connected to a lower face of the bottom portion 14c of the cover 14 and a bump cushion 18 is connected to a lower portion of the cap 32 where a shoulder in the upper portion of the cylinder 8 bumps on the bump cushion 18 in the neighborhood of the maximum compression of the shock absorber 9, thus absorbing the jolts in the neighborhood of the maximum compression.

The bump cushion 18 is formed in a tubular shape as a whole and is provided with a base portion 18a as a thick main body molded of a rubber material, and a bellows type of tubular portion 18b integral with the base portion 18a, the tubular portion 18b being thinner than the base portion 18a.

Note that a bending, leg portion of the cap 32 elastically folds an outer periphery in the upper portion of the bump cushion 18. A rod guide hole 31 is formed in the center of the bump cushion 18, and the piston rod 17 penetrates through the rod guide hole 31. In this case, the bump cushion 18 does not contact the piston rod 17 to provide a circular clearance 25 between the rod guide hole 31 and the piston rod 17. And an opening 30 enlarging in a bell shape is formed in the center of the upper portion of the base portion 18a and is communicated with the rod guide hole 31. The maximum diameter of the opening 30 is set to be substantially the same as a diameter of the through hole 14d of the cover 14.

Accordingly, even when, during the compression operation of the shock absorber 9, the bump cushion 18 bumps on the shoulder of the cylinder 8, and the bellows type of the tubular portion 18b is compressed with the lower face of the rod guide hole 31 being closed, the air inside the clearance 25 can be smoothly discharged to a side of the vehicle body mount 5 in the upward direction via the opening 30 and the through hole 14d.

Even if the air inside the bump cushion 18 is thus compressed, the air is discharged to an outside of the bump cushion 18 through the clearance 25 to prevent damages of the bump cushion 18 due to air pressures.

And non-contact between the bump cushion 18 and the piston rod 17 prevents the inner surface of the bump cushion 18 from being in friction with the outer surface of the piston rod 17, which prevents plating of the piston rod 17 from being peeled off or flaws from being generated thereon. A suspension spring 11 is disposed between the vehicle body mount 5 and the shock absorber 9. The suspension spring 11 is interposed between an upper spring seat 7 attached to the vehicle body mount 5 and an under spring seat 10 attached to an outer periphery of the cylinder 8 of the shock absorber 9.

A ring-shaped bearing 19 is engaged and held in an outer periphery of the tubular portion 14a of the cover 14, and the upper spring seat 7 is held in an outer periphery of the lower portion of the bearing 19, and an upper end of the suspension spring 11 is held by the upper spring seat 7. This allows the suspension spring 11 to smoothly rotate when a rotating force around an axis of the shock absorber 9 acts on the suspension spring 11.

The upper spring seat 7 is provided with a tubular portion 1, a flange portion 2 integral with an upper end of the tubular portion 1, and a spring guide portion 3 which is integral with an outer periphery of the flange portion 2 and an outer periphery of the tubular portion 1 and equipped with a guide groove 3b opposing the outer periphery of the tubular portion 1, the upper spring seat 7 being molded of a rubber material.

The spring guide portion 3 is provided with a lower end-supporting portion 3a integral with the outer periphery of the tubular portion 1, thus providing the guide groove 3b into which the suspension spring 11 opposite to the outer periphery of the tubular portion 1 is inserted.

Note that the bearing 19 is, as shown in FIG. 1, provided with a circular inner body 20 made of a synthetic plastic material, a circular outer body 21 molded of the same material, and bearing balls 22 interposed between the inner body 20 and the outer body 21, and the bearing 19 may be molded of a rubber material.

An upper end of a dust cover 23 is engaged and held in an inner periphery of the outer body 21 of the bearing 19. The dust cover 23 is disposed between the vehicle body mount 5 and the cylinder shoulder of the shock absorber 9 to prevent dust from being attached to the piston rod 17 or the like inside the dust cover 23.

Therefore, the dust cover 23, as shown in FIG. 1, is provided with a bellows type of main body 23c, a horizontal support portion 23d disposed in an upper portion of the main body 23c, a cylindrical portion 23e formed in an upper portion of the support portion 23d, and a hook portion 23a disposed in an upper end of the cylindrical portion 23e.

Further, a lower end of the main body 23c of the dust cover 23 is, as shown in FIG. 2, pressed on a cap inclined portion 33 of the shock absorber 9 to prevent dust or rain water from entering inside the dust cover 23 from a lower side.

## Claims

1. A hydraulic shock absorber, comprising:
a cylinder;
a piston rod slidably extending from the cylinder; and
a tubular bump cushion attached to a top end of the piston rod to bump an upper portion of the cylinder on a lower face of the bump cushion at the time of a compression operation, wherein:
a circular clearance is formed between the bump cushion and an outer periphery of the piston rod inserted in the center of the bump cushion and communicated with an outside.

2. The hydraulic shock absorber according to claim 1, wherein:
the bump cushion includes a rod guide hole through which the piston rod is inserted via the circular clearance; and
a bell-shaped opening connected to the rod guide hole and communicated with the outside.

3. The hydraulic shock absorber according to claim 2, further, comprising:
a dust cover surrounding the bump cushion from an outside thereof, wherein:
the dust cover is connected at both ends to a top end portion of the piston rod and an upper portion of the cylinder.
